(19) Europäisches Patentamt

European Patent Office

Office européen des brevets

(11) **EP 1 327 765 A2**

(12) **EUROPÄISCHE PATENTANMELDUNG**

(43) Veröffentlichungstag:
 **16.07.2003 Patentblatt 2003/29**

(51) Int Cl.[7]: **F02D 41/38**, F02D 41/40,
 G01F 1/66

(21) Anmeldenummer: **02025974.3**

(22) Anmeldetag: **21.11.2002**

(84) Benannte Vertragsstaaten:
 **AT BE BG CH CY CZ DE DK EE ES FI FR GB GR
 IE IT LI LU MC NL PT SE SK TR**
 Benannte Erstreckungsstaaten:
 **AL LT LV MK RO SI**

(30) Priorität: **11.01.2002 DE 10200736**

(71) Anmelder: **ROBERT BOSCH GMBH
 70442 Stuttgart (DE)**

(72) Erfinder: **Gangi, Marco
 73734 Esslingen (DE)**

(54) **Verfahren und Vorrichtung zur Ermittlung der in einen Brennraum einer Brennkraftmaschine tatsächlich eingespritzten Kraftstoffmenge**

(57) Es wird Verfahren zur Ermittlung der in einen Brennraum einer Brennkraftmaschine tatsächlich eingespritzten Kraftstoffmenge vorgeschlagen. Das Verfahren sieht vor, dass die Durchflussgeschwindigkeit (v) beziehungsweise Druckpulsation des Kraftstoffs in einer Mediumverbindung (3) zwischen einer Hochdruckerzeugungseinrichtung und mindestens einem Injektor oder einer Einspritzdüse eines Kraftstoffeinspritzsystems (1) ermittelt wird und dass hieraus die die Mediumverbindung (3) durchströmende Kraftstoffdurchflussmenge ermittelt wird.

Fig.

EP 1 327 765 A2

**Beschreibung**

Die Erfindung betrifft ein Verfahren zur Ermittlung der in einen Brennraum einer Brennkraftmaschine tatsächlich eingespritzten Kraftstoffmenge, gemäß Anspruch 1, ein Verfahren zur Steuerung eines Kraftstoffeinspritzsystems für Brennkraftmaschinen, gemäß Anspruch 4, sowie eine Vorrichtung zur Ermittlung der in einen Brennraum einer Brennkraftmaschine tatsächlich eingespritzten Kraftstoffmenge, gemäß Anspruch 5.

Stand der Technik

Bekannt sind Common-Rail-Kraftstoffeinspritzsysteme für Brennkraftmaschinen, beispielsweise Dieselmotoren, bei denen der Kraftstoff mittels eines Hochdruckspeichers über eine Hochdruckleitung (Common-Rail) mindestens einem Injektor zuführbar ist, der den Kraftstoff mit Hochdruck in einen Brennraum einspritzt. Dem Brennraum wird ferner eine auf die eingespritzte Kraftstoffmenge abgestimmte Luftmenge zugeführt, die so groß ist, dass das Abgas eine gewünschte Qualität aufweist. Wenn jedoch die Luftmenge für eine bestimmte Kraftstoffeinspritzmenge beispielsweise zu klein ist, führt dies zu einer Verschlechterung des Verbrennungsvorgangs, was bei Dieselmotoren unter anderem zu einem sichtbaren Rauchstoß und zu einem Anstieg der Partikel im Abgas führt. Es hat sich gezeigt, dass in der Hochdruckleitung vom Hochdruckspeicher zum Injektor unerwartet Druckpulsationen auftreten können, die zu einer Verschlechterung der Abgasqualität führen, weil die dem Brennraum zugeführte Kraftstoffmenge im Verhältnis zu der in den Brennraum eingedrückten, voreingestellte Luftmenge entweder zu groß oder zu klein ist.

Vorteile der Erfindung

Das erfindungsgemäße Verfahren mit den in Anspruch 1 genannten Merkmalen bietet demgegenüber den Vorteil, dass die tatsächlich in den Brennraum der Brennkraftmaschine eingespritzte Kraftstoffmenge online ermittelbar ist. Durch die genaue Zumessbarkeit des Kraftstoffs, beispielsweise Diesel oder Benzin, kann eine gleichbleibende Abgasqualität gewährleistet werden. Es kann beispielsweise sofort die dem Brennraum für den Verbrennungsvorgang zugeführte Luftmenge an die tatsächlich in den Brennraum eingespritzte Kraftstoffmenge entsprechend angepasst werden.

Das erfindungsgemäße Verfahren sieht hierzu vor, dass die Durchflussgeschwindigkeit beziehungsweise die Druckpulsationen des Kraftstoffs in einer Mediumverbindung zwischen einer Hochdruckerzeugungseinrichtung und mindestens einem Injektor oder mindestens eine Einspritzdüse eines Kraftstoffeinspritzsystems online, das heißt zeitnah ermittelt wird.

Mit Hilfe dieses Wertes wird dann die die Mediumverbindung durchströmende Kraftstoffdurchflussmenge und somit die in den Brennraum eingespritzte Kraftstoffmenge ermittelt.

Das vorstehend beschriebene Verfahren ist beispielsweise im Zusammenhang mit einem Common-Rail-Kraftstoffeinspritzsystem einsetzbar, wobei hier die Hochdruckerzeugungseinrichtung von einem Hochdruckspeicher (Common-Rail) gebildet ist, der über die Hochdruckleitung mit dem Injektor verbunden ist. Das Verfahren ist auch bei anderen Kraftstoffeinspritzsystemen einsetzbar, wie zum Beispiel PDE (Pumpe-Düse-Einheit) oder Verteilerpumpen.

Bei einer besonders vorteilhaften Ausführungsvariante des Verfahrens ist vorgesehen, dass mindestens eine Ultraschallwelle durch die von dem Kraftstoff durchströmte Mediumverbindung geschickt wird, und dass aus der Frequenzverschiebung zwischen der empfangenen Frequenz und der gesendeten Frequenz die Durchflussgeschwindigkeit des Kraftstoffs ermittelt wird.

Die Kraftstoffdurchflussgeschwindigkeit wird vorzugsweise mittels folgender Formel für die Frequenzverschiebung berechnet:

$$f_E = \frac{f_s}{1 + \frac{v}{c}} \qquad \rightarrow \qquad \frac{f_E}{f_s} = \frac{1}{1 + \frac{v}{c}}$$

wobei $f_E$ die empfangene Frequenz, $f_S$ die gesendete Frequenz, $v$ die Durchflussgeschwindigkeit und $c$ die Schallgeschwindigkeit im Medium (Kraftstoff (Diesel; Benzin)) ist. Daraus wird dann die momentan in den Brennraum eingespritzte Kraftstoffmenge ermittelt, vorzugsweise mittels einer nicht genannten Formel berechnet. Denkbar ist auch, dass anhand eines in einer Steuereinheit hinterlegten Diagramms, das beispielsweise empirisch ermittelt wird, die Kraftstoffmenge in Abhängigkeit der Durchflussgeschwindigkeit bestimmt wird.

Weitere vorteilhafte Ausführungsformen des Verfahrens ergeben sich aus Kombinationen der in den Unteransprüchen genannten Merkmale.

Die Erfindung betrifft auch ein Verfahren zur Steuerung eines Kraftstoffeinspritzsystems für Brennkraftmaschinen mit den Merkmalen des Anspruchs 4. Dieses sieht vor, dass in Abhängigkeit der in einen Brennraum der Brennkraftmaschine, beispielsweise Dieselmotor, tatsächlich eingespritzten Kraftstoffmenge die Kraftstoffmenge und/oder dem Brennraum zugeführte Luftmenge für den Verbrennungsvorgang so eingestellt werden/wird, dass eine zumindest im Wesentlichen gleichbleibende Abgasqualität erreicht wird. Voraussetzung hierfür ist, dass die wirklich eingespritzte Kraftstoffmenge online bestimmt wird.

Die Erfindung betrifft ferner eine Vorrichtung zur Ermittlung der in einen Brennraum einer Brennkraftmaschine tatsächlich eingespritzten Kraftstoffmenge mit den Merkmalen des Anspruchs 5. Die Vorrichtung zeichnet sich durch eine Einrichtung zur Ermittlung der Durchflussgeschwindigkeit des Kraftstoffs aus, die einer zwischen einer Hochdruckerzeugungseinrichtung und mindestens einem Injektor oder mindestens einer Einspritzdüse eines Kraftstoffeinspritzsystems vorgesehen Mediumverbindung zugeordnet ist. Die Vorrichtung umfasst darüber eine Auswerteeinrichtung zur Berechnung der Kraftstoffmenge aus der ermittelten Durchflussgeschwindigkeit. Mittels der Vorrichtung ist es möglich, Kraftstoffpulsationen in der Mediumverbindung, insbesondere Hochdruckleitung, zu erkennen und die tatsächlich eingespritzte Kraftstoffmenge online zu bestimmen. Um eine zumindest annähernd gleichbleibende Abgasqualität sicherzustellen, kann beispielsweise die dem Brennraum zugeführte Luftmenge entsprechend erhöht oder verringert werden. Eine weitere Alternative besteht darin, die bekannte eingespritzte Kraftstoffmenge auf die zugeführte Luftmenge abzustimmen.

Besonders bevorzugt wird ein Ausführungsbeispiel der Vorrichtung, das sich dadurch auszeichnet, dass die Einrichtung zur Ermittlung der Durchflussgeschwindigkeit des Kraftstoffs in der Mediumverbindung mindestens eine Ultraschallquelle und wenigstens einen Ultraschallaufnehmer umfasst, die im Bereich der Mediumverbindung einander gegenüberliegend angeordnet sind. Die Frequenzverschiebung zwischen der gesendeten und der empfangenen Frequenz, bedingt durch den Dopplereffekt, ist dabei ein Maß für die Kraftstoffdurchflussgeschwindigkeit und kann anhand der vorstehend beschriebenen Formel berechnet werden.

Vorteilhaft Ausführungsformen der Vorrichtung ergeben sich aus Kombinationen der aus den Unteransprüchen hervorgehenden Merkmale.

Zeichnungen

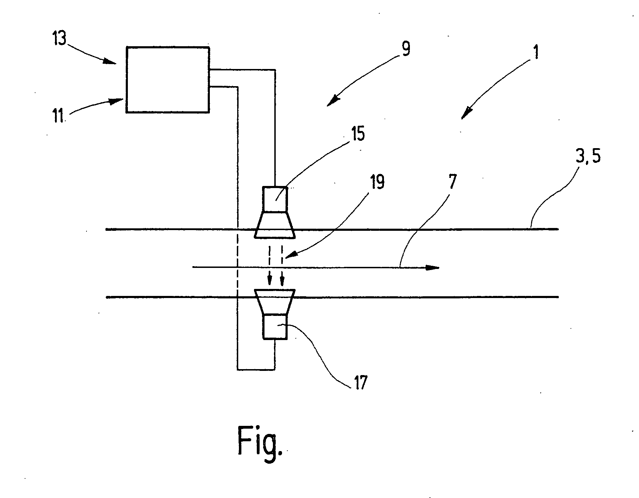

Die Erfindung wird nachfolgend anhand der zugehörigen Zeichnung noch näher erläutert. Die einzige Figur zeigt stark schematisiert einen Ausschnitt eines Kraftstoffeinspritzsystems für Brennkraftmaschinen.

Beschreibung des Ausführungsbeispiels

Die Figur zeigt einen Ausschnitt eines Common-Rail-Kraftstoffeinspritzsystems 1 für Brennkraftmaschinen, beispielsweise Dieselmotoren, das in Fahrzeugen einsetzbar ist.

Das Common-Rail-Kraftstoffeinspritzsystems 1 umfasst eine Hochdruckerzeugungseinrichtung (Hochdruckspeicher), mindestens einen Injektor zur Einspritzung des Kraftstoffs in einen Brennraum der Brennkraftmaschine sowie wenigstens eine Mediumverbindung zwischen der Hochdruckerzeugungseinrichtung und dem Injektor. Aufbau und Funktion derartiger Einspritzsysteme ist bekannt, so dass hier nicht näher darauf eingegangen wird.

In der Figur ist lediglich ein Abschnitt der Mediumverbindung 3 dargestellt, die hier von einer Hochdruckleitung 5 gebildet ist. Diese wird in der Darstellung der Figur von links nach rechts in Richtung eines Pfeils 7 von dem unter Hochdruck stehenden Kraftstoff durchströmt.

Es ist ferner eine Vorrichtung 9 vorgesehen, mittels derer die in den Brennraum tatsächlich eingespritzten Kraftstoffmenge online, das heißt im normalen Betrieb der Brennkraftmaschine ermittelbar ist. Die Vorrichtung 9 umfasst eine Einrichtung 11 zur Ermittlung der Durchflussgeschwindigkeit des Kraftstoffs in der Hochdruckleitung 5 und eine Auswerteeinrichtung 13 zur Berechnung der Kraftstoffmenge aus der ermittelten Durchflussgeschwindigkeit. Die Einrichtung 11 und die Auswerteeinrichtung 13 sind hier beispielhaft in eine Steuereinheit des Kraftstoffeinspritzsystems 1 integriert, können jedoch ohne weiteres als separate Baueinheiten ausgeführt sein.

Bei dem in der Figur darstellten Ausführungsbeispiel der Einrichtung 11 ist eine Ultraschallquelle 15 und ein Ultraschallaufnehmer 17 vorgesehen, die im Bereich der Mediumverbindung diametral zueinander angeordnet sind. Mittel der Ultraschallquelle 15 kann eine Ultraschallwelle 19, wie mit Pfeilen angedeutet, durch die Hochdruckleitung 5 geschickt werden, die von dem Ultraschallaufnehmer 17 wieder aufgenommen wird. Die Ultraschallwelle 19 verläuft hier quer zur Strömungsrichtung 7 des Kraftstoffs.

Aufgrund des durch die Kraftstoffströmung hervorgerufenen Dopplereffekts entsteht eine Frequenzverschiebung zwischen der gesendeten Frequenz und der empfangenen Frequenz. Aus der Frequenzverschiebung wird mittels der vorstehend genannten Formel die Durchflussgeschwindigkeit des Kraftstoffs in der Hochdruckleitung 5 berechnet. Aus der berechneten Durchflussgeschwindigkeit wird die in den Brennraum tatsächlich eingespritzte Kraftstoffmenge bestimmt. Die vorstehend beschriebenen Schritte erfolgen mit Hilfe der Auswerteeinrichtung 13.

Anhand der online, das heißt im Betrieb der Brennkraftmaschine ermittelten, momentan in den Brennraum eingespritzten Kraftstoffmenge kann gegebenenfalls zumindest die dem Verbrennungsvorgang zugeführte Luftmenge entsprechend variiert werden, um eine gleichbleibende Abgasqualität zu erhalten. Dies erfolgt mit geeigneten Mitteln, auf die hier nicht eingegangen wird.

Das anhand der Figur beschriebene Ausführungsbeispiel der Vorrichtung 9 ermöglicht eine kompakte, platzsparende Bauweise und kann daher ohne weiteres in Fahrzeugen untergebracht werden.

Die Ultraschallquelle 15 und der Schallaufnehmer 17 weisen in bevorzugter Ausführungsform jeweils eine Piezokeramik auf. Selbstverständlich können auch andere Ultraschallquellen und -aufnehmer eingesetzt werden.

Zusammenfassend bleibt festzuhalten, dass die erfindungsgemäßen Verfahren und Vorrichtungen nicht nur im Zusammenhang mit Common-Rail-Kraftstoffeinspritzsystemen, sondern auch bei PDE (Pumpe-Düse-Einheit) und Verteilerpumpen einsetzbar sind.

**Patentansprüche**

1. Verfahren zur Ermittlung der in einen Brennraum einer Brennkraftmaschine tatsächlich eingespritzten Kraftstoffmenge, **dadurch gekennzeichnet, dass** die Durchflussgeschwindigkeit (v) beziehungsweise Druckpulsation des Kraftstoffs in einer Mediumverbindung (3) zwischen einer Hochdruckerzeugungseinrichtung und mindestens einem Injektor oder einer Einspritzdüse eines Kraftstoffeinspritzsystems ermittelt, vorzugsweise gemessen, wird und dass hieraus die die Mediumverbindung (3) durchströmende Kraftstoffdurchflussmenge ermittelt, vorzugsweise berechnet wird.

2. Verfahren nach Anspruch 1, **dadurch gekennzeichnet, dass** mindestens eine Ultraschallwelle (19) durch die vom Kraftstoff durchströmte Mediumverbindung (3) geschickt wird, und dass aus der Frequenzverschiebung zwischen der empfangenen Frequenz ($f_E$) und der gesendeten Frequenz ($f_S$) die Durchflussgeschwindigkeit (v) ermittelt wird.

3. Verfahren nach einem der vorhergehenden Ansprüche, **dadurch gekennzeichnet, dass** die Durchflussgeschwindigkeit (v) mittels folgender Formel berechnet wird:

$$f_E = \frac{f_S}{1 + \frac{v}{c}}$$

wobei $f_E$ die empfangene Frequenz, $f_S$ die gesendete Frequenz, v die Durchflussgeschwindigkeit und c die Schallgeschwindigkeit im Medium (Kraftstoff) ist.

4. Verfahren zur Steuerung eines Kraftstoffeinspritzsystems (1) für Brennkraftmaschinen, insbesondere nach einem der Ansprüche 1 bis 3, **dadurch gekennzeichnet, dass** in Abhängigkeit der in einen Brennraum der Brennkraftmaschine tatsächlich eingespritzten Kraftstoffmenge die dem Brennraum zugeführte Luftmenge für den Verbrennungsvorgang und/oder die Kraftstoffmenge selbst so eingestellt werden/wird, dass eine zumindest im Wesentlichen gleichbleibende Abgasqualität erreicht wird.

5. Vorrichtung (9) zur Ermittlung der in einen Brennraum einer Brennkraftmaschine tatsächlich eingespritzten Kraftstoffmenge, insbesondere zur Durchführung eines Verfahrens nach einem der Ansprüche 1 bis 4, **gekennzeichnet durch** eine einer zwischen einer Hochdruckerzeugungseinrichtung und mindestens einem Injektor oder einer Einspritzdüse eines Kraftstoffeinspritzsystems (1) vorgesehen Mediumverbindung (3) zugeordneten Einrichtung (11) zur Ermittlung der Durchflussgeschwindigkeit (v) des Kraftstoffs und eine Auswerteeinrichtung (13) zur Berechnung der Kraftstoffmenge aus der ermittelten Durchflussgeschwindigkeit (v).

6. Vorrichtung nach einem der vorhergehenden Ansprüche, **dadurch gekennzeichnet, dass** die Einrichtung (9) mindestens eine Ultraschallquelle (15) und wenigstens einen Ultraschallaufnehmer (17) umfasst, die im Bereich der Mediumverbindung (3) einander. gegenüberliegend angeordnet sind.

7. Vorrichtung nach einem der vorhergehenden Ansprüche, **dadurch gekennzeichnet, dass** die Ultraschallquelle (15) und der Ultraschallaufnehmer (17) jeweils mindestens ein Piezoelement aufweisen.

Fig.